# EUROPÄISCHE PATENTSCHRIFT

(11) **EP 1 498 613 B1**
(45) Veröffentlichungstag und Bekanntmachung des Hinweises auf die Patenterteilung: **19.05.2010**
(21) Anmeldenummer: 04015546.7
(22) Anmeldetag: 01.07.2004
(51) Int. Cl.: F04D 29/66, F04D 29/02, B29C 45/00, F04D 29/60, F04D 29/64, F16F 15/08

(54) **Lüfteranordnung, und Verfahren zur Herstellung einer solchen**
Fan assembly and its fabrication method
Ensemble ventilateur et sa méthode de fabrication

(30) Priorität: 15.07.2003 DE 10333404
(43) Veröffentlichungstag der Anmeldung: 19.01.2005
(73) Patentinhaber: ebm-papst St. Georgen GmbH & Co. KG, 78112 St. Georgen (DE)
(72) Erfinder: Winkler, Wolfgang Arno, 78112 St. Georgen (DE); Metzger, Peter, 78050 VS-Villingen (DE)
(74) Vertreter: Raible, Tobias

(56) Entgegenhaltungen:
- EP-A- 0 642 206
- EP-A- 0 925 880
- DE-A1- 3 823 447
- DE-C- 883 952
- FR-A- 1 255 721
- GB-A- 883 686
- US-A- 2 717 748
- US-A- 4 171 190
- US-A- 4 385 025
- US-A- 4 568 243
- US-A- 5 786 647

## Beschreibung

Die Erfindung betrifft eine Lüfteranordnung, und sie betrifft ein Verfahren zur Herstellung einer solchen.

Bei zahlreichen Anwendungen, z. B. bei der Belüftung eines Fahrzeugsitzes oder von Geräteeinheiten, werden die von einem Lüfter erzeugten Schwingungen als störend empfunden. Solche Schwingungen entstehen durch den normalen Antrieb des Lüfterrads, sowie durch Last- und Drehzahländerungen. Die Schwingungen werden dabei vom Lüfter auf die gesamte Vorrichtung übertragen, in der sich der Lüfter befindet.

Aus der DE 196 43 760 C1 ist eine Lüfteranordnung bekannt, bei der ein Lüfter über elastische Bänder aufgehängt ist. Dies hat aber den Nachteil, dass Herstellung und Einfädeln der Bänder kompliziert und aufwändig sind.

Aus der DE 3 823 447 A1 kennt man einen Sensorlüfter zur Messung der Lufttemperatur im Fahrgastraum eines Kraftfahrzeugs. Dieser Sensorlüfter hat ein von einem elektronisch kommutierten Motor angetriebenes Radiallüfterrad, mittels dessen er Luft, an einem Temperatursensor vorbei, aus dem Fahrgastraum ansaugt und durch eine Ausblasöffnung wieder in diesen ausbläst.

Der Sensorlüfter hat einen axialen Fortsatz, der mit einem flachen elastischen Bauelement verbunden ist. Dieses Bauelement ist mit seiner Peripherie im Gehäuse des Sensorlüfters befestigt, um eine Geräuschentkopplung zu bewirken, doch ist eine solche nur partiell möglich, da Motor und Lüfterrad im Gehäuse des Sensorlüfters hin- und herpendeln können, wobei dann das Lüfterrad am Gehäuse streift. Ein solcher Sensorlüfter ist also nicht kippsicher.

Wird die Ausblasöffnung eines solchen Radiallüfters blockiert, so steigt seine Drehzahl an. Dadurch zieht der Motor des Lüfters mehr Strom und erhöht das Geräuschniveau, was in einem Kraftfahrzeug der Oberklasse regelmäßig zu Beanstandungen der Kundschaft führt. Auch wird durch diese Temperaturerhöhung die Messung der Lufttemperatur verfälscht. Gerade bei Fahrzeugen der Oberklasse ist die Temperaturmessung sehr sensibel, weil die Klimaanlage sowohl in Lappland wie in der Sahara zuverlässig und richtig funktionieren muss, was Testfahrten von Tausenden von Kilometern erfordert.

Ferner kennt man aus der US 4 568 243 eine Lüfteranordnung mit einem Axiallüfter, dieser hat eine Saugseite und eine Druckseite. Zu dieser Lüfteranordnung gehört ein Lüftergehäuse, innerhalb dessen ein Lüfterrad angeordnet ist, das im Betrieb Luft von der Saugseite zur Druckseite fördert. Radial außerhalb des Lüftergehäuses ist ein Befestigungsrahmen angeordnet. Eine Membran aus einem elastischen Werkstoff verbindet Lüftergehäuse und Befestigungsrahmen elastisch miteinander. Auf diese Weise werden die vom Lüfter erzeugten Schwingungen gedämpft.

Solche Lüfter werden u. a. zur Belüftung von Fahrzeugsitzen verwendet. Wenn sich der Fahrer auf einen solchen Fahrzeugsitz setzt und dabei die Auslassöffnung einer Lüfteranordnung verdeckt, tritt ein sog. lufttechnischer Kurzschluss auf, d. h. die Luftströmung des Lüfters wird nicht mehr abgeführt, sondern sie wird blockiert. Dadurch entsteht ein erhöhtes Geräuschniveau, was unerwünscht Ist.

Es ist daher Aufgabe der Erfindung, eine neue Lüfteranordnung, und ein Verfahren zur Herstellung einer solchen, bereit zu stellen.

Nach der Erfindung wird diese Aufgabe gelöst durch eine Lüfteranordnung gemäß Patentanspruch 1. Durch die Membran wird eine gute Entkopplung der durch den Lüfter erzeugten Schwingungen von dem Befestigungsrahmen erreicht, und wenn die Lüfteranordnung auf ihrer Druckseite verschlossen ist, kann die Luft durch die in der Membran vorgesehenen Ausnehmungen von der Druckseite zur Saugseite zurück strömen. Wenn die Blockierung nicht mehr vorhanden ist, ist die Luft sofort wieder für ihre eigentliche Funktion verfügbar, nämlich z. B. für die Belüftung des Fahrersitzes.

Eine andere vorteilhafte Ausgestaltung der Erfindung ist Gegenstand des Patentanspruchs 20. Ein solches Verfahren ermöglicht es, eine Membran aus einem elastomeren Werkstoff schnell, sicher und preiswert herzustellen. Dies gilt ebenso für das Verfahren nach Anspruch 21, das besonders arbeitssparend ist.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den Unteransprüchen. Es zeigen:
- Fig. 1: eine Draufsicht auf ein erstes Ausführungsbeispiel einer erfindungsgemäßen Lüfteranordnung, gesehen in Richtung des Pfeils I der Fig. 2,
- Fig. 2: eine vergrößerte Schnittdarstellung, gesehen längs der Linie II - 11 der Fig. 1,
- Fig. 3: ein zweites Ausführungsbeispiel einer erfindungsgemäßen Lüfteranordnung, in einer Schnittdarstellung analog Fig. 2,
- Fig. 4: einen Schnitt durch ein drittes Ausführungsbeispiel einer erfindungsgemäßen Lüfteranordnung, mit einer wellenförmigen Membran, in einer Darstellung analog Fig. 2 und Fig. 3,
- Fig. 5: einen Schnitt durch ein viertes Ausführungsbeispiel einer erfindungsgemäßen Lüfteranordnung, mit einer stoffschlüssig befestigten Membran,
- Fig. 6: eine Draufsicht auf ein fünftes Ausführungsbeispiel einer erfindungsgemäßen Lüfteranordnung, mit einer Membran, welche mit ovalen Langlöchern versehen ist,
- Fig. 7: eine Draufsicht auf ein sechstes Ausführungsbeispiel einer erfindungsgemäßen Lüfteranordnung mit einer Membran mit eckigen Langlöchern,
- Fig. 8: schematisch eine obere Spritzgussform und eine untere Spritzgussform zur Herstellung eines Lüftergehäuses und eines Befestigungsrahmens, und
- Fig. 9: schematisch eine Vorrichtung mit einem oberen Formteil und einem unteren Formteils zur Herstellung einer Membran.

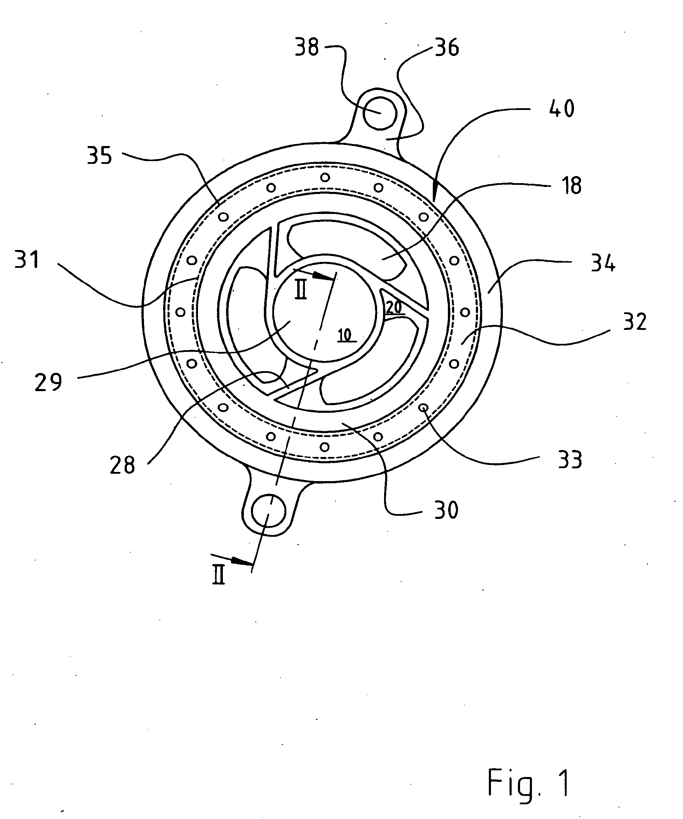

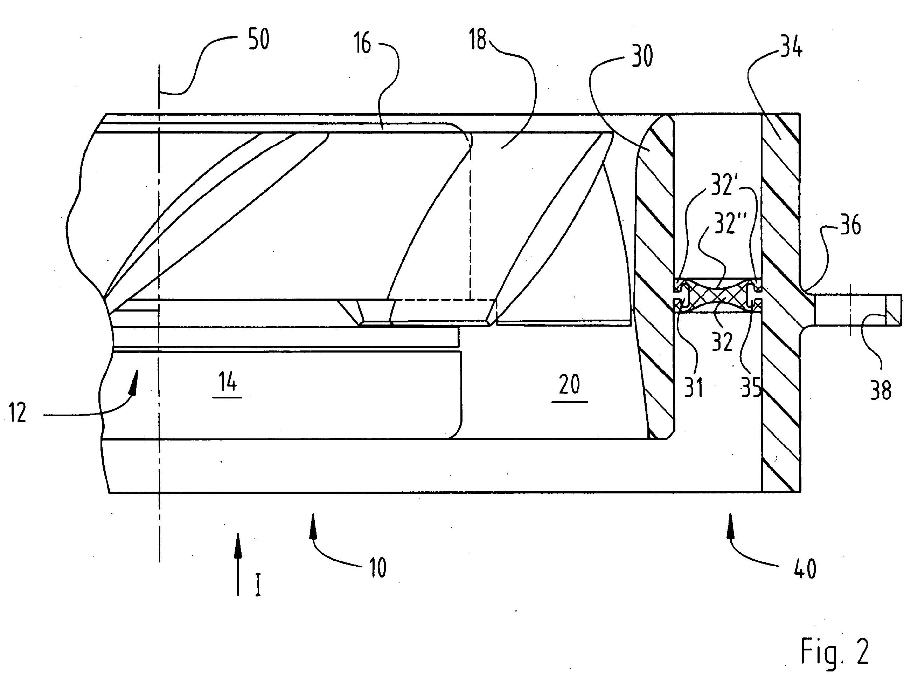

**Fig. 1** zeigt eine Draufsicht auf ein erstes Ausführungsbeispiel einer erfindungsgemäßen Lüfteranordnung 40 mit einem Lüfter 10, gesehen aus der Richtung I der Fig. 2.

**Fig. 2** zeigt eine Seitenansicht der Lüfteranordnung 40, gesehen im Schnitt längs der Linie II-II der Fig. 1.

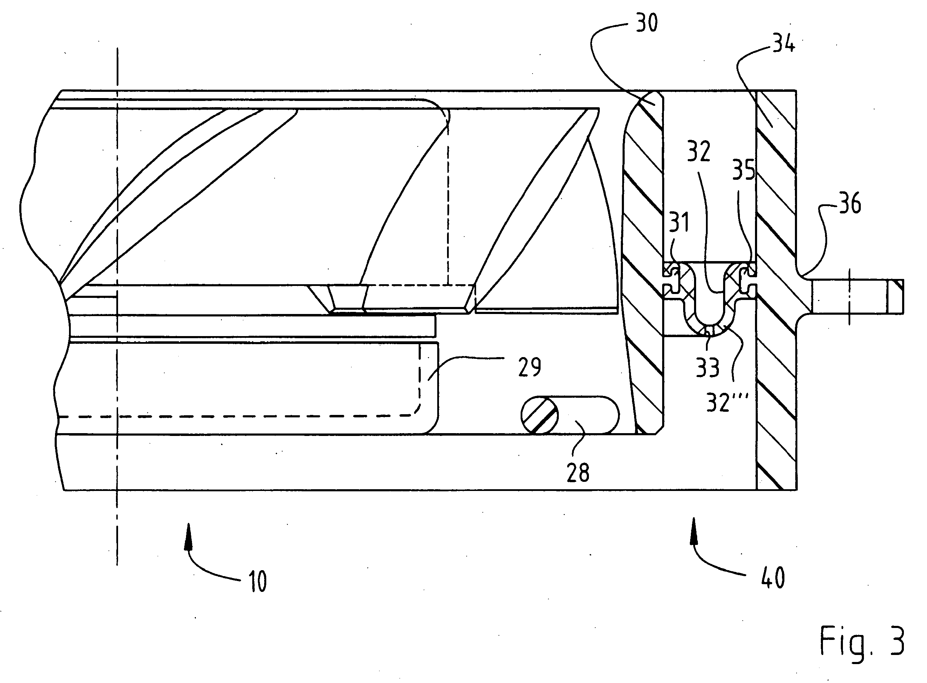

Der Lüfter 10 hat einen Elektromotor 12 mit einer Statoranordnung 14 und einem Rotor 16, ferner Lüfterflügel 18, Stege 28, eine Motorhalteschale 29 (vgl. Fig. 3) und ein Lüftergehäuse 30 mit einem seitlichen Vorsprung 31 auf. Die Drehachse des Lüfters ist mit 50 bezeichnet.

Die Lüfteranordnung 40 hat eine Membran 32 mit einer Mehrzahl von Öffnungen 33, und einen Befestigungsrahmen 34 mit einem Vorsprung 35, einem Befestigungsrahmenhalter 36 und einer Befestigungsöffnung 38.

Der Stator 14 ist über die Stege 28 mit dem Lüftergehäuse 30 verbunden und treibt den Rotor 16 an. Dadurch werden die Lüfterblätter 18 in Bewegung gesetzt, und es fließt ein Luftstrom durch den Bereich 20 zwischen dem Lüftergehäuse 30 und dem Stator 14. Dargestellt ist ein Axiallüfter 12.

Das Lüftergehäuse 30 ist über die umlaufende ringförmige Membran 32 mit dem Befestigungsrahmen 34 verbunden, welcher in diesem Ausführungsbeispiel zwei Befestigungsrahmenhalter 36 hat. Befestigungsöffnungen 38 in den Befestigungsrahmenhaltern 36 dienen zur Befestigung des Befestigungsrahmens 34 und damit auch des Lüfters 10, beispielsweise mittels (nicht gezeigter) Schrauben.

Die Membran 32 verbindet somit den Lüfter 10 mit dem Befestigungsrahmen 34. Sie umschließt - zwecks sicherer Verbindung - sowohl einen Vorsprung 31 am Lüftergehäuse 30 als auch einen Vorsprung 35 am Befestigungsrahmen 34. Die Vorsprünge 31, 35 können auch schwalbenschwanzförmig ausgebildet sein. In diesem Ausführungsbeispiel verlaufen die Vorsprünge 31, 35 um den ganzen Umfang des Lüfters herum, also 360°. Das Lüftergehäuse 30 und der Befestigungsrahmen 34 sind somit sowohl auf der Seite des Lüftergehäuses als auch auf der Seite des Befestigungsrahmens über den gesamten bzw. im wesentlichen über den gesamten Umfang miteinander elastisch nachgiebig verbunden.

Das Lüftergehäuse 30 und der Befestigungsrahmen 34 sowie die in diesem Ausführungsbeispiel mit diesen einstückig ausgebildeten Vorsprünge 31, 35 sind bevorzugt aus Kunststoff oder Metall hergestellt, und die Membran 32 besteht bevorzugt aus einem Elastomer.

### Arbeitsweise

Das Lüftergehäuse 30 und damit auch der Lüfter 10 werden durch die Membran 32 sowohl in axialer als auch in radialer Richtung in der gewünschten Lage relativ zu dem Befestigungsrahmen 34 gehalten und bilden so die Lüfteranordnung 40.

Dabei ist die Verbindung nicht starr, sondern elastisch und schwingfähig. Während starre Verbindungen Schwingungen des Lüfters 10 weitgehend ungedämpft auf den Befestigungsrahmen übertragen würden, führt die Membran 32 aus einem Elastomer zu einer gewünschten stärkeren Dämpfung bei der Übertragung von Schwingungen des Lüfters 10 auf den Befestigungsrahmen 34.

Eine Membran 32 ist schwingfähig, da sie relativ dünn ist. Wie in Fig. 2 zu sehen ist, hat die Membran an den Randbereichen 32', an denen sie an dem Lüftergehäuse 30 und dem Befestigungsrahmen 34 befestigt ist, eine für eine sichere Verbindung geeignete Dicke. In der Mitte 32" ist sie dagegen dünn, so dass der Lüfter 10 sich gegenüber dem Befestigungsrahmen 34 bewegen kann.

Die Dämpfung durch die Membran 32 ist abhängig von der zu übertragenden Frequenz sowie von den Membraneigenschaften, also insbesondere von Material und Form der Membran.

Jeder Lüfter 10 erzeugt Schwingungen in für ihn charakteristischen Frequenzbereichen.

Es ist deshalb vorteilhaft, die Membraneigenschaften derart zu beeinflussen, dass die Membran 32 insbesondere in den charakteristischen Frequenzbereichen eine gute Dämpfung und damit auch eine gute Entkopplung aufweist. Aus den folgenden Änderungsmöglichkeiten wird empirisch ein Optimum für das jeweilige Lüftermodell ermittelt:

Als Material, aus dem die Membran hergestellt ist, wird bevorzugt ein geeigneter Kunststoff, insbesondere ein Elastomer verwendet, bei dem die Härte variiert werden kann. Ein Maß für die Härte ist die so genannte Shore-Härte. Es ist auch eine Kombination verschiedener Materialien möglich.

Weiterhin wird zur Beeinflussung der Membraneigenschaften die Grundform der Membran angepasst, Öffnungen in der Membran werden ausgebildet, und die Dicke der Membran wird variiert. Im folgenden sind weitere Ausführungsbeispiele aufgezeigt, welche teilweise auch Kombinationen dieser Variationsmöglichkeiten darstellen.

**Fig. 3** zeigt eine teilweise geschnittene Seitenansicht eines zweiten Ausführungsbeispiels einer Lüfteranordnung 40 nach der Erfindung, in einem Schnitt entsprechend Fig. 1.

Die Membran 32 ist in diesem Ausführungsbeispiel im Querschnitt U-förmig ausgebildet, und der Lüfter kann deshalb Schwingungen mit größeren Schwingungsamplituden ausführen. Dies ist insbesondere zur Dämpfung niederfrequenter Schwingungen vorteilhaft.

Die Membran 32 weist an der Ausbuchtung 32''' eine oder mehrere Öffnungen 33 auf. Durch das Fehlen des Materials und damit der Masse an dieser Stelle wird die Schwingungseigenschaft der Membran 32 beeinflusst.

Weiterhin hat die Öffnung 33 den Vorteil, dass in Anwendungsfällen, in denen die Druckseite verschlossen ist - beispielsweise, wenn ein Fahrer sich auf den Fahrzeugsitz setzt und sämtliche Auslassöffnungen verdeckt -, ein sogenannter lufttechnischer Kurzschluss vermieden wird, da die Luft durch die Öffnung 33 auf die Saugseite zurückfließen kann. Hierdurch kann der Lüfter 10 weiterhin in einem bevorzugten Arbeitsbereich arbeiten. Die genaue Ausgestaltung der Öffnungen 33 wird bevorzugt auch unter Berücksichtigung dieses Aspekts gewählt.

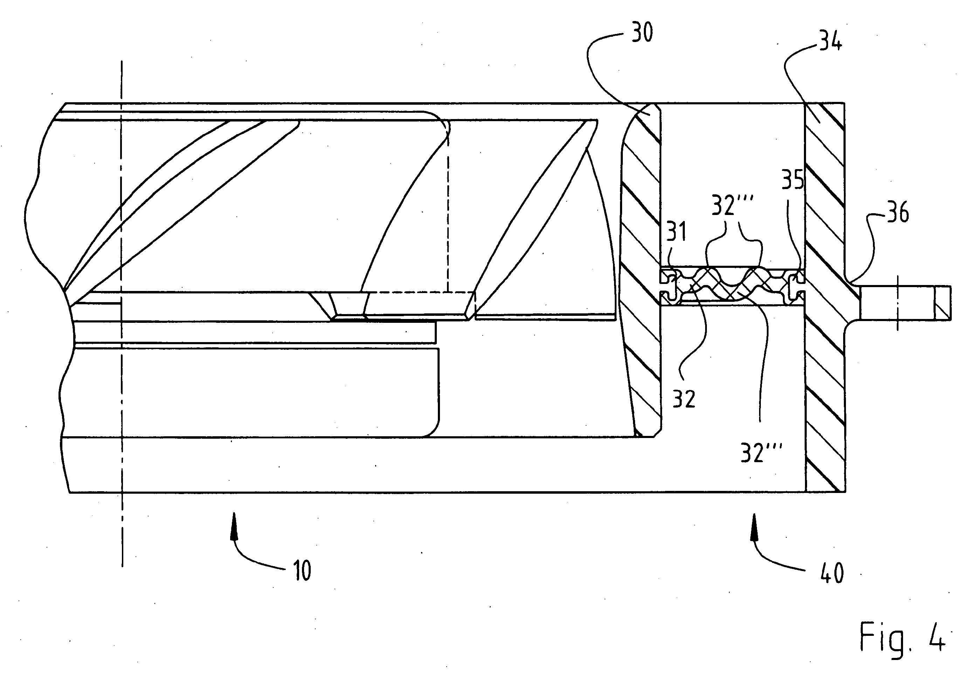

**Fig. 4** zeigt eine teilweise geschnittene Seitenansicht eines dritten Ausführungsbeispiels einer erfindungsgemäßen Lüfteranordnung 40, in einem Schnitt entsprechend Fig. 1.

Die Membran 32 der Lüfteranordnung 40 ist bei diesem Ausführungsbeispiel wellenförmig bzw. annähernd sinusförmig ausgebildet und hat mehrere Ausbuchtungen 32'''. Durch die größere Länge der Membran 32 kann der Lüfter 10 in axialer wie auch in radialer Richtung stärkere Bewegungen durchführen.

Auch in diesem Ausführungsbeispiel ist es möglich, wie in Fig. 3 in der Membran 32 Öffnungen anzubringen, um die Dämpfungseigenschaften zu beeinflussen.

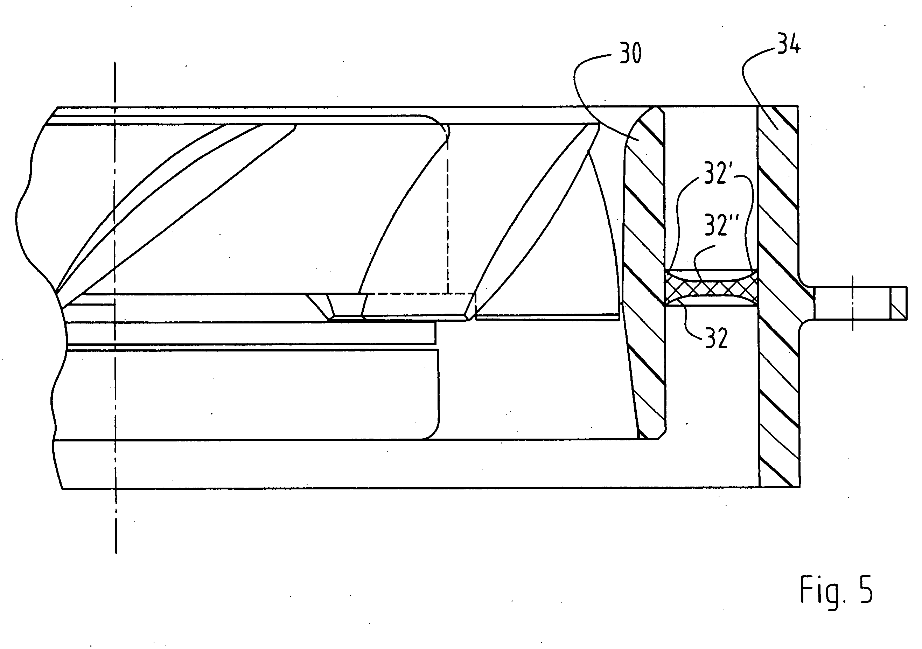

**Fig. 5** zeigt eine teilweise geschnittene Seitenansicht eines vierten Ausführungsbeispiels einer erfindungsgemäßen Lüfteranordnung 40, in einem Schnitt entsprechend Fig. 1.

Eine Membran 32 ist hier stoffschlüssig mit dem Lüftergehäuse 30 und dem Befestigungsrahmen 34 verbunden. Es sind also keine Vorsprünge 31, 35 vorhanden, mit denen die Membran 32 formschlüssig verbunden wird. Für eine derartige Verbindung muss das Material der Membran 32 geeignet sein, indem es z.B. mit der Oberfläche des Materials des Lüftergehäuses 30 und des Befestigungsrahmens 34 eine chemische Verbindung eingeht.

Die Randbereiche 32' der Membran 32 sind verbreitert, um eine größere Oberfläche für die Verbindung zu erhalten.

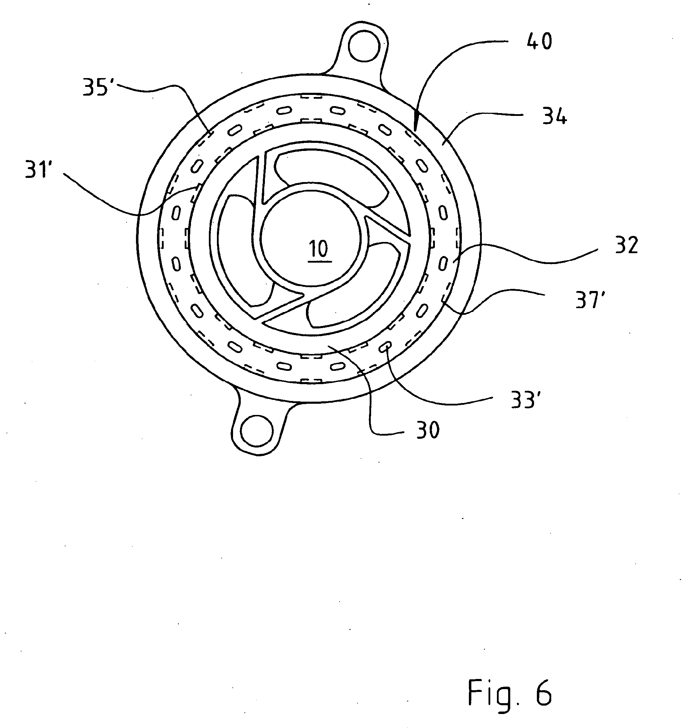

**Fig. 6** zeigt eine Draufsicht auf ein fünftes Ausführungsbeispiel einer erfindungsgemäßen Lüfteranordnung 40.

Das Lüftergehäuse 30 und der Befestigungsrahmen 34 sind über eine Membran 32 verbunden, welche über den gesamten Umfang mit Langlöchern 33' versehen ist, welche runde bzw. abgerundete Enden 37' aufweisen. Wird als Membran 32 eine U-oder wellenförmige Membran verwendet, so befinden sich die Löcher 33' bevorzugt an einer axial höchsten oder tiefsten Stelle, vgl. Fig. 3.

Die Vorsprünge 31' und 35' sind in diesem Ausführungsbeispiel in regelmäßigen Abständen unterbrochen. Falls die formschlüssige Verbindung an den Vorsprüngen nicht für einen sicheren Halt der Membran 32 ausreicht, wird diese bevorzugt zumindest an den Stellen ohne Vorsprünge 31', 35' zusätzlich stoffschlüssig verbunden.

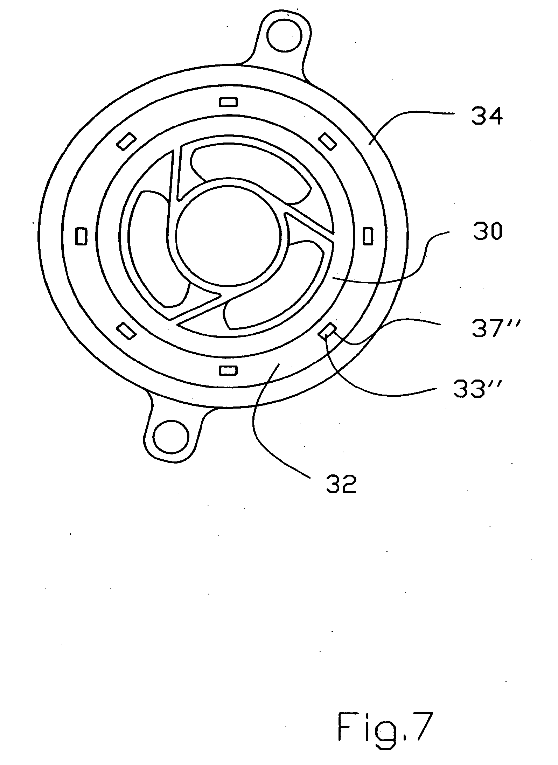

**Fig. 7** zeigt eine Draufsicht auf ein sechstes Ausführungsbeispiel einer erfindungsgemäßen Lüfteranordnung 40.

Das Lüftergehäuse 30 und der Befestigungsrahmen 34 sind über eine Membran 32 verbunden, welche mit eckigen Langlöchern 33" versehen ist, welche im wesentlichen rechteckförmige Enden 37" aufweisen.

Naturgemäß sind im Rahmen der vorliegenden Erfindung vielfältige Abwandlungen, Modifikationen und insbesondere auch Kombinationen möglich. Die Aussparungen 33 können neben runden, ovalen, viereckigen Formen auch dreieckige, mehreckige, quadratische oder andere Formen aufweisen. Durch die Auswahl der Form der Aussparung 33 kann für den jeweiligen Motortyp ein gutes Schwingungsverhalten der Membran 32 erreicht werden.

Die Vorsprünge 31 am Lüftergehäuse 30 und die Vorsprünge 35 am Befestigungsrahmen 34 können unterschiedlich ausgebildet sein, die Form der Vorsprünge kann variiert werden, und die mögliche Unterbrechung der Vorsprünge 31 und 35 um den Umfang kann variiert werden.

Die Befestigung des Befestigungsrahmens 34 an einem zu kühlenden Bauteil kann ebenfalls elastisch erfolgen, um eine Schwingungsübertragung zusätzlich zu minimieren.

Alternativ kann zusätzlich zu der einen Membran 32 eine zu der ersten Membran 32 axial verschobene zweite Membran vorgesehen werden. Hierdurch wird auch bei großen auftretenden Kräften ein sicherer Halt des Lüfters 10 gewährleistet.

### Herstellung

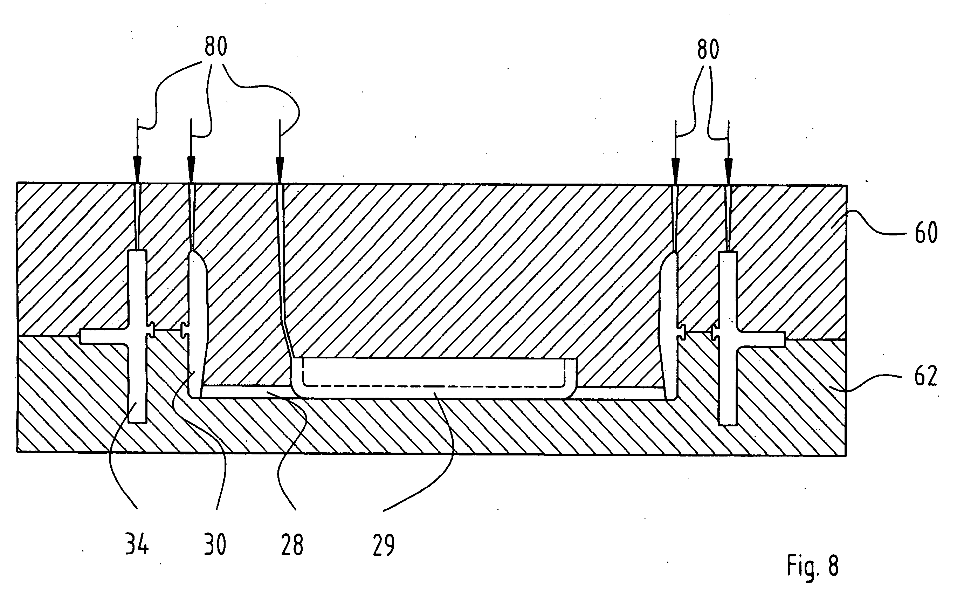

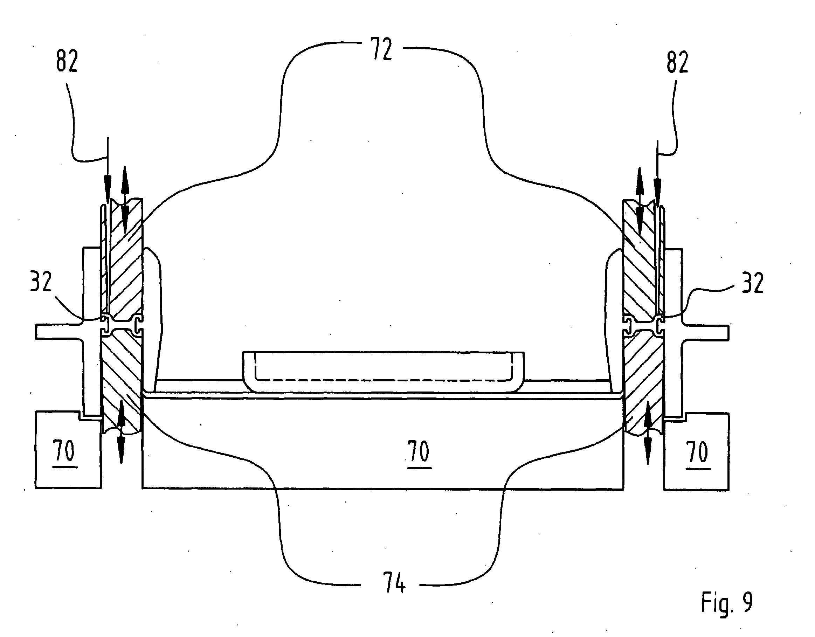

**Fig. 8** zeigt schematisch eine obere Spritzgussformhälfte 60 und eine untere Spritzgussformhälfte 62, und **Fig. 9** zeigt schematisch eine Haltevorrichtung 70, ein oberes Formteil 72 und ein unteres Formteils 74. Die oberen Formteile 60 und 72 weisen jeweils Kanäle 80 bzw. 82 auf, durch die das zu verarbeitende Material zugeführt wird.

Für die Herstellung der erfindungsgemäßen Haltevorrichtung 40 wird eine sogenannte 2-K-Technik angewandt, bei der zwei Kunststoffe verarbeitet werden. Dabei werden das Lüftergehäuse 30 (ggf. mit den Stegen 28 und der Motorhalteschale 29) und der Befestigungsrahmen 34, beispielsweise im Spritzgussverfahren, über die Kanäle 80 aus einem harten Kunststoff gespritzt und in der richtigen relativen Lage zueinander gehalten, vgl. Fig. 8.

Über zwei von beiden axialen Seiten herein ragende komplementäre Formteile 72, 74 wird die Form der Membran 32 definiert, und die Membran 32 wird durch Einspritzen eines weichen Elastomers gefertigt. Anschließend wird der Lüfter 10 in die Schale 29 gepresst.

Es ist dabei kein Einfädeln oder eine sonstige umständliche Prozedur notwendig, und es entsteht sofort eine formschlüssige Verbindung mit den Vorsprüngen 31, 35.

## Patentansprüche

1. Lüfteranordnung mit einem Axiallüfter, welcher aufweist:
Eine Saugseite und eine Druckseite;
ein Lüftergehäuse (30);
ein im Lüftergehäuse (30) angeordnetes Axiallüfterrad (18), das dazu ausgebildet ist, Luft von der Saugseite zur Druckseite zu transportieren;
einen Befestigungsrahmen (34), welcher radial außerhalb des Lüftergehäuses (30) angeordnet ist;
eine Membran (32) aus einem elastischen Werkstoff, welche das Lüftergehäuse (30) und
den Befestigungsrahmen (34) elastisch miteinander verbindet,
**dadurch gekennzeichnet, dass** in dieser Membran (32) Ausnehmungen (33) vorgesehen sind, die einen Rückstrom der vom Axiallüfterrad (18) geförderten Luft von der Druckseite des Axiallüfters zu dessen Saugseite ermöglichen, wenn die Druckseite der Lüfteranordnung (40) verschlossen ist,
dass die Membran (32), im Querschnitt gesehen, mindestens eine Ausbuchtung (32"') aufweist,
und dass die Ausnehmungen (33) im Bereich der mindestens einen Ausbuchtung (32'") ausgebildet sind.

2. Lüfteranordnung nach Anspruch 1, bei welcher die Membran (32) aus einem Kunststoff ausgebildet ist.

3. Lüfteranordnung nach Anspruch 1 oder 2, bei welcher die Membran (32) aus einem Elastomer ausgebildet ist.

4. Lüfteranordnung nach einem der vorhergehenden Ansprüche, bei welcher die Membran (32) nach Art einer direkten Verbindung zwischen dem Befestigungsrahmen (34) und dem Lüftergehäuse (30) ausgebildet ist.

5. Lüfteranordnung nach einem der vorhergehenden Ansprüche, bei welcher die Membran (32) mit dem Lüftergehäuse (30) im wesentlichen über dessen gesamten Umfang verbunden ist.

6. Lüfteranordnung nach einem der vorhergehenden Ansprüche, bei welcher die Membran (32) mit dem Befestigungsrahmen (34) im wesentlichen über dessen gesamten Innenumfang verbunden ist.

7. Lüfteranordnung nach einem der vorhergehenden Ansprüche, bei welcher die Membran (32) stoffschlüssig mit dem Lüftergehäuse (30) und/oder mit dem Befestigungsrahmen (34) verbunden ist.

8. Lüfteranordnung nach einem der vorhergehenden Ansprüche, bei welcher die Membran (32) formschlüssig mit dem Lüftergehäuse (30) und/oder dem Befestigungsrahmen (34) verbunden ist.

9. Lüfteranordnung nach einem der vorhergehenden Ansprüche, bei welcher die Membran (32) im Radialschnitt gesehen nach Art eines U ausgebildet ist.

10. Lüfteranordnung nach einem der Ansprüche 1 bis 8, bei welcher die Membran (32) im Radialschnitt gesehen wellenförmig ausgebildet ist.

11. Lüfteranordnung nach einem der vorhergehenden Ansprüche, bei welcher die Membran (32), im Querschnitt gesehen, an der Stelle ihres Übergangs zum Lüftergehäuse (30) eine größere Dicke und **dadurch** einen vergrößerten Verbiridungsquerschnitt (32') aufweist..

12. Lüfteranordnung nach einem der vorhergehenden Ansprüche, bei welcher die Membran (32), im Querschnitt gesehen, an der Stelle ihres Übergangs zum Befestigungsrahmen (34) eine größere Dicke und **dadurch** einen vergrößerten Verbindungsquerschnitt (32') aufweist.

13. Lüfteranordnung nach Anspruch 11 und 12, bei welcher die Membran (32) an einem Bereich (32") zwischen den Stellen (32') größerer Dicke eine reduzierte Dicke aufweist.

14. Lüfteranordnung nach einem der vorhergehenden Ansprüche, bei welcher die Ausnehmungen (33) kreisrund ausgebildet sind.

15. Lüfteranordnung nach einem der Ansprüche 1 bis 13, bei welcher die Ausnehmungen (33) rechteckförmig ausgebildet sind.

16. Lüfteranordnung nach Anspruch 15, bei welcher die Ausnehmungen (33) im wesentlichen quadratisch ausgebildet sind.

17. Lüfteranordnung nach einem der Ansprüche 1 bis 13, bei welcher die Ausnehmungen (33) als Langlöcher ausgebildet sind.

18. Lüfteranordnung nach Anspruch 17, bei welcher die Langlöcher im wesentlichen eckige Enden aufweisen.

19. Lüfteranordnung nach Anspruch 17, bei welcher die Langlöcher im wesentlichen runde Enden aufweisen.

20. Verfahren zur Herstellung einer Lüfteranordnung (40), welche einen Axiallüfter mit einer Saugseite und einer Druckseite, ein Lüftergehäuse (30) und einen Befestigungsrahmen (34) aufweist, mit folgenden Schritten:
a) Ein erstes Teil (72) und ein zweites Teil (74) einer Spritzgussform werden zwischen dem Lüftergehäuse (30) und dem Befestigungsrahmen (34) in Position gebracht;
b) ein Kunststoff, insbesondere ein Elastomer, wird zwischen das erste Teil (72) und das zweite Teil (74) der Spritzgussform gespritzt, um eine Membran (32) zu erzeugen, welche das Lüftergehäuse (30) und den Befestigungsrahmen (34) elastisch miteinander verbindet, wobei in der Membran (32) Ausnehmungen (33) vorgesehen sind, die bei einem Verschluss der Druckseite der Lüfteranordnung (40) einen Rückstrom von Luft von dieser Druckseite zur Saugseite ermöglichen,
und wobei ferner die Membran (32), im Querschnitt gesehen, mindestens eine Ausbuchtung (32'") aufweist, in deren Bereich die Ausnehmungen (33) ausgebildet sind.

21. Verfahren nach Anspruch 20, bei welchem das Lüftergehäuse (30) und der Befestigungsrahmen (34) im Spritzgussverfahren aus einem harten Kunststoff hergestellt werden,
und im sogenannten 2K-Verfahren zwischen Lüftergehäuse (30) und Befestigungsrahmen (34) die mit den Ausnehmungen (33) versehene Membran (32) durch Spritzguss aus einem elastomeren Kunststoff hergestellt wird.

## Claims

1. Fan arrangement with an axial fan, having:
a suction side and a pressure side;
a fan housing (30);
an axial fan wheel (18), which is arranged in the fan housing (30) and is in a form to transport air from the suction side to the pressure side;
a fixing frame (34), which is arranged radially outside the fan housing (30);
a membrane (32) of an elastic material, which connects the fan housing (30) and the fixing frame (34) elastically to each other,
**characterized in that** in this membrane (32), openings (33) are provided, and make possible a reverse flow of the air conveyed by the axial fan wheel (18) from the pressure side of the axial fan to its suction side, if the pressure side of the fan arrangement (40) is locked,
that the membrane (32), seen in cross-section, has at least one bulge (32"'),
and that the openings (33) are formed in the region of the at least one bulge (32"').

2. Fan arrangement according to Claim 1, wherein the membrane (32) is made of a plastic.

3. Fan arrangement according to Claim 1 or 2, wherein the membrane (32) is made of an elastomer.

4. Fan arrangement according to one of the preceding claims, wherein the membrane (32) is in the form of a direct connection between the fixing frame (34) and the fan housing (30).

5. Fan arrangement according to one of the preceding claims, wherein the membrane (32) is joined to the fan housing (30) essentially over the latter's whole circumference.

6. Fan arrangement according to one of the preceding claims, wherein the membrane (32) is joined to the fixing frame (34) essentially over the latter's whole inner circumference.

7. Fan arrangement according to one of the preceding claims, wherein the membrane (32) is joined to the fan housing (30) and/or to the fixing frame (34) by substance-to-substance bonding.

8. Fan arrangement according to one of the preceding claims, wherein the membrane (32) is joined to the fan housing (30) and/or to the fixing frame (34) by positive locking.

9. Fan arrangement according to one of the preceding claims, wherein the membrane (32), seen in radial cross-section, is in the form of a U.

10. Fan arrangement according to one of Claims 1 to 8, wherein the membrane (32), seen in radial cross-section, is in the form of a wave.

11. Fan arrangement according to one of the preceding claims, wherein the membrane (32), seen in cross-section, at the point of its transition to the fan housing (30) has greater thickness and thus an enlarged connection cross-section (32').

12. Fan arrangement according to one of the preceding claims, wherein the membrane (32), seen in cross-section, at the point of its transition to the fixing frame (34) has greater thickness and thus an enlarged connection cross-section (32').

13. Fan arrangement according to Claims 11 and 12, wherein the membrane (32), at a region (32'') between the points (32') of greater thickness, has a reduced thickness.

14. Fan arrangement according to one of the preceding claims, wherein the openings (33) are of circular form.

15. Fan arrangement according to one of Claims 1 to 13, wherein the openings (33) are of rectangular form.

16. Fan arrangement according to Claim 15, wherein the openings (33) are of essentially square form.

17. Fan arrangement according to one of Claims 1 to 13, wherein the openings (33) are in the form of long holes.

18. Fan arrangement according to Claim 17, wherein the long holes have essentially angular ends.

19. Fan arrangement according to Claim 17, wherein the long holes have essentially round ends.

20. Method of producing a fan arrangement (40), having an axial fan with a suction side and a pressure side, a fan housing (30) and a fixing frame (34), with the following steps:
a) a first part (72) and a second part (74) of an injection mould are brought into position between the fan housing (30) and the fixing frame (34);
b) a plastic, in particular an elastomer, is injected between the first part (72) and the second part (74) of the injection mould, to generate a membrane, which connects the fan housing (30) and the fixing frame (34) elastically to each other,
openings (33) being provided in the membrane (32), and making possible a reverse flow of air from this pressure side to the suction side, if the pressure side of the fan arrangement (40) is locked,
and the membrane (32), seen in cross-section, having at least one bulge (32"'), in the region of which the openings (33) are formed.

21. Method according to Claim 20, wherein the fan housing (30) and the fixing frame (34) are produced from a hard plastic by the injection moulding method,
and in the so-called 2-component method, between fan housing (30) and fixing frame (34), the membrane (32), which is provided with openings (33), is produced from an elastomer plastic by injection moulding.

## Revendications

1. Groupe de ventilation équipé d'un ventilateur axial, lequel comprend:
un côté aspiration et un côté pression ;
un carter (30) ;
une roue axiale de ventilation (18), logée dans ledit carter (30) du ventilateur et conçue pour charrier de l'air vers le côté pression, à partir du côté aspiration ;
un cadre de fixation (34) placé radialement à l'extérieur dudit carter (30) du ventilateur ;
une membrane (32) en un matériau élastique, qui relie élastiquement l'un à l'autre le carter (30) du ventilateur et le cadre de fixation (34) ;
**caractérisé par le fait que** des évidements (33) prévus dans cette membrane (32) permettent un reflux de l'air, charrié par la roue axiale de ventilation (18), depuis le côté pression du ventilateur axial vers le côté aspiration de ce dernier lorsque le côté pression dudit groupe de ventilation (40) est obturé,
que ladite membrane (32) présente au moins une zone ventrue (32"'), observée en coupe transversale,
et que lesdits évidements (33) sont pratiqués dans la région de ladite zone ventrue (32"') prévue au minimum.

2. Groupe de ventilation selon la revendication 1, dans lequel la membrane (32) est réalisée en une matière plastique.

3. Groupe de ventilation selon la revendication 1 ou 2, dans lequel la membrane (32) est réalisée en un élastomère.

4. Groupe de ventilation selon l'une des revendications précédentes, dans lequel la membrane (32) est conçue à la manière d'une liaison directe entre le cadre de fixation (34) et le carter (30) du ventilateur.

5. Groupe de ventilation selon l'une des revendications précédentes, dans lequel la membrane (32) est reliée, au carter (30) du ventilateur, pour l'essentiel par l'intégralité du pourtour de celui-ci.

6. Groupe de ventilation selon l'une des revendications précédentes, dans lequel la membrane (32) est reliée, au cadre de fixation (34), pour l'essentiel par l'intégralité du pourtour intérieur de celui-ci.

7. Groupe de ventilation selon l'une des revendications précédentes, dans lequel la membrane (32) est reliée matériellement au carter (30) du ventilateur et/ou au cadre de fixation (34).

8. Groupe de ventilation selon l'une des revendications précédentes, dans lequel la membrane (32) est reliée, par concordance de formes, au carter (30) du ventilateur et/ou au cadre de fixation (34).

9. Groupe de ventilation selon l'une des revendications précédentes, dans lequel la membrane (32) est réalisée à la manière d'un U, observée en coupe radiale.

10. Groupe de ventilation selon l'une des revendications 1 à 8, dans lequel la membrane (32) est de réalisation ondulée, observée en coupe radiale.

11. Groupe de ventilation selon l'une des revendications précédentes, dans lequel la membrane (32) offre, observée en coupe transversale, une épaisseur supérieure dans la zone de sa transition avec le carter (30) du ventilateur, et présente ainsi une section transversale de solidarisation (32') agrandie.

12. Groupe de ventilation selon l'une des revendications précédentes, dans lequel la membrane (32) offre, observée en coupe transversale, une épaisseur supérieure dans la zone de sa transition avec le cadre de fixation (34), et présente ainsi une section transversale de solidarisation (32') agrandie.

13. Groupe de ventilation selon les revendications 11 et 12, dans lequel la membrane (32) offre une épaisseur réduite dans une région (32") située entre les zones (32') d'épaisseur supérieure.

14. Groupe de ventilation selon l'une des revendications précédentes, dans lequel les évidements (33) sont de réalisation circulaire.

15. Groupe de ventilation selon l'une des revendications 1 à 13, dans lequel les évidements (33) sont de réalisation rectangulaire.

16. Groupe de ventilation selon la revendication 15, dans lequel les évidements (33) sont de réalisation substantiellement carrée.

17. Groupe de ventilation selon l'une des revendications 1 à 13, dans lequel les évidements (33) sont réalisés sous la forme de trous oblongs.

18. Groupe de ventilation selon la revendication 17, dans lequel les trous oblongs possèdent des extrémités substantiellement anguleuses.

19. Groupe de ventilation selon la revendication 17, dans lequel les trous oblongs possèdent des extrémités substantiellement arrondies.

20. Procédé de fabrication d'un groupe de ventilation (40) équipé d'un ventilateur axial comprenant un côté aspiration et un côté pression, un carter (30) et un cadre de fixation (34), englobant les étapes suivantes :
a) une première partie (72) et une seconde partie (74) d'un moule de coulée par injection sont positionnées entre le carter (30) du ventilateur et le cadre de fixation (34) ;
b) une matière plastique, en particulier un élastomère, est injectée entre la première partie (72) et la seconde partie (74) dudit moule de coulée par injection, afin de produire une membrane (32) reliant élastiquement, l'un à l'autre, ledit carter (30) du ventilateur et ledit cadre de fixation (34),
sachant que ladite membrane (32) comporte des évidements (33) qui, lors d'une obturation du côté pression dudit groupe de ventilation (40), permettent un reflux d'air vers le côté aspiration, à partir de ce côté pression,
et sachant par ailleurs que ladite membrane (32) présente, observée en coupe transversale, au moins une zone ventrue (32'") dans la région de laquelle lesdits évidements (33) sont pratiqués.

21. Procédé selon la revendication 20, dans lequel le carter (30) du ventilateur et le cadre de fixation (34) sont produits, par coulée par injection, en une matière plastique dure,
et la membrane (32) pourvue des évidements (33) est produite par coulée par injection en un matériau élastomère, entre ledit carter (30) du ventilateur et ledit cadre de fixation (34), en appliquant le procédé dit « à deux composants ».
